# EUROPÄISCHE PATENTSCHRIFT

(11) **EP 1 789 822 B1**
(45) Veröffentlichungstag und Bekanntmachung des Hinweises auf die Patenterteilung: **16.03.2011**
(21) Anmeldenummer: 05754450.4
(22) Anmeldetag: 14.06.2005
(51) Int. Cl.: G02B 1/10, B29D 11/00

(54) **VERBESSERUNG DES EINSCHLEIF- UND ANSTEMPELVERHALTENS VON BRILLENGLÄSERN MIT HYDROPHOBER BESCHICHTUNG**
IMPROVING THE GRINDING TO SIZE AND STAMPING BEHAVIOR OF HYDROPHOBIC COATED SPECTACLE LENSES
AMELIORATION DU COMPORTEMENT EN CAS DE TAILLE ET DE POINÇONNAGE DE VERRES DE LUNETTES A REVETEMENT HYDROPHOBE

(30) Priorität: 14.09.2004 DE 102004044441
(43) Veröffentlichungstag der Anmeldung: 30.05.2007
(73) Patentinhaber: Rodenstock GmbH, 80469 München (DE)
(72) Erfinder: GÖTZ, Bärbel, 86159 Augsburg (DE); STOLZ, Cécile, 81373 München (DE); SCHERG, Gerd-Peter, 85598 München (DE)
(74) Vertreter: Müller-Boré & Partner Patentanwälte
(86) Internationale Anmeldenummer: PCT/EP2005/006373
(87) Internationale Veröffentlichungsnummer: WO 2006/029661

(56) Entgegenhaltungen:
- EP-A- 0 841 581
- WO-A-2004/046791
- US-A1- 2004 142 185
- US-A1- 2005 098 098

## Beschreibung

Die vorliegende Erfindung betrifft ein Brillenglas mit einem speziellen Schichtaufbau und einer Oberflächenenergie von kleiner als 15 mJ/m² und dessen Verwendung beim Einschleifen und/oder Anstempeln von Brillengläsern.

Im Stand der Technik sind eine Vielzahl beschichteter Brillengläser bekannt, die jedoch meist eine sehr glatte Oberfläche aufweisen und somit beim Einschleifen und/oder Anstempeln von Brillengläsern Probleme, wie Achsverdrehung, hervorrufen. Ferner sind mit einer permanenten hydrophoben und oleophoben Beschichtung versehene Brillengläser bekannt, deren Oberflächenenergie durch Auftragen einer temporären Schutzschicht derart eingestellt wird, daß sie ≥ 15 mJ/m² beträgt, wodurch sich ein günstigeres Einschleifverhalten ergibt.

Die der vorliegenden Erfindung zugrundeliegende technische Aufgabe besteht darin, ein Brillenglas, das eine hydrophobe und oleophobe Beschichtung trägt, mit verbessertem Einschleifverhalten und Anstempelverhalten bzw. Bestempelungsfähigkeit bereitzustellen.

Diese Aufgabe wird durch Bereitstellen der in den Ansprüchen gekennzeichneten Ausführungsformen gelöst.

Insbesondere wird gemäß der vorliegenden Erfindung ein Brillenglas bereitgestellt, umfassend in der folgenden Reihenfolge (ausgehend von dem Brillenglas) (a) eine Beschichtung mit hydrophoben und oleophoben Eigenschaften, die (a1) ein Silan mit mindestens einer Fluor-enthaltenden Gruppe mit mehr als 20 Kohlenstoffatomen oder (a2) eine perfluorierte Kohlenwasserstoffverbindung umfaßt, gegebenenfalls (b) eine ablösbare Schicht aus einem anorganischen Material, und (c) eine darauf aufgebrachte transparente, ablösbare Schutzschicht, die ein Silan mit mindestens einer Fluor-enthaltenden Gruppe mit ≤ 20 Kohlenstoffatomen umfaßt, wobei das Brillenglas mit dem vorstehenden Schichtaufbau eine Oberflächenenergie von kleiner als 15 mJ/m² aufweist.

Gemäß einer bevorzugten Ausführungsform der vorliegenden Erfindung wird ein Brillenglas bereitgestellt, umfassend (a) eine Beschichtung mit hydrophoben und oleophoben Eigenschaften, die (a1) ein Silan mit mindestens einer Fluor-enthaltenden Gruppe mit mehr als 20 Kohlenstoffatomen oder (a2) eine perfluorierte Kohlenwasserstoffverbindung umfaßt, und (c) eine darauf aufgebrachte transparente, ablösbare Schutzschicht, die ein Silan mit mindestens einer Fluor-enthaltenden Gruppe mit ≤ 20 Kohlenstoffatomen umfaßt, wobei das Brillenglas mit dem vorstehenden Schichtaufbau eine Oberflächenenergie von kleiner als 15 mJ/m² aufweist.

Vorzugsweise weist das erfindungsgemäße Brillenglas mit dem vorstehenden Schichtaufbau eine Oberflächenenergie von kleiner als 14 mJ/m², besonders bevorzugt kleiner als 13 mJ/m² und am meisten bevorzugt kleiner als 12 mJ/m², auf.

Die Oberflächenergie wird nach dem Owens-Wendt-Verfahren, das in "Estimation of the surface force energy of polymers", Owens D.K., Wendt R.G. (1969) J. APPL. POLYM. SCI., 13, 1741-1747 beschrieben ist, bestimmt. Als Flüssigkeiten werden in dem Owens-Wendt-Verfahren Wasser, Diiodmethan und Hexadecan verwendet.

Als Brillenglas kann ein behandeltes oder unbehandeltes Kunststoffglas, beispielsweise aus Polythiourethan, PMMA, Polycarbonat, Polyacrylat oder Polydiethylenglycolbisallylcarbonat (CR 39^{®}), oder ein behandeltes oder unbehandeltes Mineralglas verwendet werden. Unmittelbar auf die Oberfläche eines unbehandelten Brillenglases kann eine üblicherweise verwendete Hartschicht und/oder eine übliche Antireflexschicht, die beispielsweise einen ein- bis sechsschichtigen Aufbau aufweisen kann, aufgebracht werden. In diesem Fall wird die Beschichtung (a) mit hydrophoben und oleophoben Eigenschaften nicht auf die Oberfläche des Brillenglases unmittelbar, sondern auf die auf das Brillenglas aufgebrachte Hartschicht oder Antireflexschicht aufgebracht. Derartige ein- oder mehrschichtige Antireflexschichten sind einem Fachmann bekannt und ein Fachmann ist in der Lage geeignete Materialien und Schichtdicken einer Antireflexschicht in geeigneter Weise auszuwählen.

Die Beschichtung (a) mit hydrophoben und oleophoben Eigenschaften umfaßt vorzugsweise (a1) ein Silan mit mindestens einer Fluor-enthaltenden Gruppe mit mehr als 20 Kohlenstoffatomen, vorzugsweise mehr als 30 Kohlenstoffatomen, besonders bevorzugt mehr als 40 Kohlenstoffatomen und am meisten bevorzugt mehr als 50 Kohlenstoffatomen. Die Beschichtung (a) mit hydrophoben und oleophoben Eigenschaften kann jedoch auch aus einem entsprechenden Siloxan oder Silazan mit mindestens einer Fluor-enthaltenden Gruppe mit mehr als 20 Kohlenstoffatomen aufgebaut sein.

Das Silan (a1) mit mindestens einer Fluor-enthaltenden Gruppe mit mehr als 20 Kohlenstoffatomen basiert vorzugsweise auf einem Silan mit mindestens einer hydrolysierbaren Gruppe. Geeignete hydrolysierbare Gruppen unterliegen keiner besonderen Beschränkung und sind einem Fachmann bekannt. Beispiele für an ein Siliziumatom gebunde hydrolysierbare Gruppen sind Halogenatome, wie Chlor, -N-Alkylgruppen, wie -N(CH₃)₂ oder -N(C₂H₅)₂, Alkoxygruppen oder Isocyanatgruppen, wobei eine Alkoxygruppe, insbesondere eine Methoxygruppe oder Ethoxygruppe, als hydrolysierbare Gruppe bevorzugt ist. Es ist jedoch auch möglich, ein Silan (a1) mit mindestens einer Fluor-enthaltenden Gruppe mit mehr als 20 Kohlenstoffatomen zu verwenden, das mindestens eine Hydroxylgruppe trägt. Bei Verwendung eines Silans (a1) mit mindestens einer Fluor-enthaltenden Gruppe mit mehr als 20 Kohlenstoffatomen auf Basis eines Silans mit mindestens einer hydrolysierbaren Gruppe oder Hydroxylgruppe kann eine (dauerhafte) chemische Bindung zwischen der Oberfläche des behandelten oder unbehandelten Brillenglases bzw. der Oberfläche der Hartschicht oder der Antireflexschicht eines Brillenglases, beispielsweise über Hydroxylgruppen an der Oberfläche, und dem Silan (a1) gebildet werden, was gemäß der vorliegenden Erfindung bevorzugt ist.

Das Silan (a1) mit mindestens einer Fluor-enthaltenden Gruppe mit mehr als 20 Kohlenstoffatomen umfaßt vorzugsweise eine oder mehrere polyfluorierte Gruppe(n) oder eine oder mehrere perfluorierte Gruppe(n), wobei eine oder mehrere polyfluorierte oder perfluorierte Alkylgruppe(n), eine oder mehrere polyfluorierte oder perfluorierte Alkenylgruppe(n) und/oder eine oder mehrere polyfluorierte oder perfluorierte Polyethereinheiten-enthaltende Gruppe(n) besonders bevorzugt sind. Bevorzugte Polyethereinheiten-enthaltende Gruppen umfassen eine oder mehrere -(CF₂)ₓO-Einheit(en) mit x = 1 bis 10, wobei x = 2 bis 3 besonders bevorzugt ist.

Gemäß einer bevorzugten Ausführungsform der vorliegenden Erfindung weist das Silan (a1) eine Fluor-enthaltende Gruppe mit mehr als 20 Kohlenstoffatomen und drei hydrolysierbare Gruppen oder Hydroxylgruppen auf.

Ferner kann es bevorzugt sein, daß die Beschichtung (a) mit hydrophoben und oleophoben Eigenschaften aus einer perfluorierten Kohlenwasserstoffverbindung aufgebaut ist. Die perfluorierte Kohlenwasserstoffverbindung unterliegt keiner wesentlichen Beschränkung. Es ist jedoch bevorzugt Polytetrafluorethylen als perforierte Kohlenwasserstoffverbindung zu verwenden.

Die Beschichtung (a) mit hydrophoben und oleophoben Eigenschaften ist vorzugsweise ausschließlich aus (a1) einem Silan mit mindestens einer Fluor-enthaltenden Gruppe mit mehr als 20 Kohlenstoffatomen oder (a2) einer perfluorierten Kohlenwasserstoffverbindung aufgebaut. Es ist jedoch auch möglich, ein Gemisch aus einem oder mehreren Silan(en) (a1) und/oder einer oder mehreren perfluorierten Kohlenwasserstoffverbindung(en), gegebenenfalls mit weiteren anorganischen, metallorganischen oder organischen Hilfsstoffen für die Beschichtung (a), zu verwenden.

Die gegebenenfalls zwischen der Beschichtung (a) und der Schutzschicht (c) vorgesehene ablösbare Schicht (b) aus einem anorganischen Material kann aus einem üblicherweise für optische Beschichtungen verwendeten Material aufgebaut sein und unterliegt keinen besonderen Beschränkungen. Geeignete Materialien für die ablösbare Schicht (b) aus einem anorganischen Material sind insbesondere SiO₂, Al₂O₃, Ta₂O₅, TiO₂, ZrO₂, Ag, Cu, Au oder Cr oder Gemische davon. Die Schicht (b) kann aus einer oder mehreren Schicht(en) aus den vorstehend beschriebenen Materialien aufgebaut sein, wobei ein einschichtiger oder zweischichtiger Aufbau bevorzugt ist.

Die transparente, ablösbare Schutzschicht (c) umfaßt ein Silan mit mindestens einer Fluor-enthaltenden Gruppe mit ≤ 20 Kohlenstoffatomen, vorzugsweise ≤ 18 Kohlenstoffatomen, besonders bevorzugt ≤ 15 Kohlenstoffatomen und am meisten bevorzugt ≤ 12 Kohlenstoffatomen. Die transparente, ablösbare Schutzschicht (c) kann jedoch auch ein entsprechendes Siloxan oder Silazan mit mindestens einer Fluor-enthaltenden Gruppe mit ≤ 20 Kohlenstoffatomen umfassen.

Das Silan mit mindestens einer Fluor-enthaltenden Gruppe mit ≤ 20 Kohlenstoffatomen in der Schutzschicht (c) umfaßt vorzugsweise eine oder mehrere teilweise fluorierte Fluoralkylgruppe(n) oder Fluoralkenylgruppe(n). Unter einem Silan mit einer teilweise bzw. nicht vollständig fluorierten Fluoralkylgruppe oder Fluoralkenylgruppe wird gemäß der vorliegenden Erfindung ein Silan verstanden, das keine perfluorierte Fluoralkylgruppe oder keine perfluorierte Fluoralkenylgruppe trägt. Die teilweise fluorierte Fluoralkylgruppe öder Fluoralkenylgruppe trägt neben Fluoratomen auch Wasserstoffatome, wobei die teilweise fluorierte Fluoralkylgruppe oder Fluoralkenylgruppe vorzugsweise nicht mehr als 90% Fluoratome, besonders bevorzugt nicht mehr als 80% Fluoratome, aufweist. Das Silan mit mindestens einer Fluor-enthaltenden Gruppe mit ≤ 20 Kohlenstoffatomen in der Schutzschicht (c) kann auch eine oder mehrere hydrolysierbare Gruppe(n) oder Hydroxylgruppe(n), wie vorstehend beschrieben, aufweisen.

Die transparente, ablösbare Schutzschicht (c) ist vorzugsweise ausschließlich aus einem Silan mit mindestens einer Fluor-enthaltenden Gruppe mit ≤ 20 Kohlenstoffatomen aufgebaut. Es ist jedoch auch möglich, ein Gemisch aus einem oder mehreren Silan(en) mit mindestens einer Fluor-enthaltenden Gruppe mit ≤ 20 Kohlenstoffatomen, gegebenenfalls mit weiteren anorganischen, metallorganischen oder organischen Hilfsstoffen für die Schutzschicht (c), zu verwenden.

Die Beschichtung (a) mit hydrophoben und oleophoben Eigenschaften und die transparente, ablösbare Schutzschicht (c) können durch übliche Verfahren auf das Brillenglas aufgebracht werden, wobei es bevorzugt ist, diese Beschichtungen durch Aufdampfen, CVD-Verfahren oder durch ein Tauchverfahren aufzubringen. Die gegebenenfalls vorgesehene ablösbare Schicht (b) aus einem anorganischen Material wird vorzugsweise durch Aufdampfen, Sputtern oder ein Plasmaunterstütztes CVD-Verfahren aufgebracht.

Die Schichtdicke der Beschichtung (a) mit hydrophoben und oleophoben Eigenschaften, die auf der Oberfläche des Brillenglases bereitgestellt ist, unterliegt grundsätzlich keiner besonderen Beschränkung. Sie wird jedoch vorzugsweise auf eine Dicke von ≤ 50 nm, vorzugsweise ≤ 20 nm, eingestellt.

Die Schichtdicke der ablösbaren Schicht (b) aus einem anorganischen Material unterliegt keinen wesentlichen Beschränkungen, liegt jedoch üblicherweise in einem Bereich von etwa 1 nm bis etwa 200 nm, wobei eine Schichtdicke in einem Bereich von 10 nm bis 100 nm bevorzugt ist.

Die Schichtdicke der transparenten, ablösbaren Schutzschicht (c) unterliegt keiner besonderen Beschränkung, beträgt jedoch vorzugsweise < 50 nm, besonders bevorzugt < 20 nm, und liegt am meisten bevorzugt in einem Bereich von etwa 3 nm bis etwa 10 nm.

Darüber hinaus ist es bevorzugt, daß der Abrollwinkel eines mit Beschichtung (a) beschichteten Referenzglassubstrats kleiner als der Abrollwinkel eines mit Schutzschicht (c) beschichteten Referenzglassubstrats ist. Als Referenzglassubstrat, das entweder mit Beschichtung (a) oder mit Schutzschicht (c) beschichtet wird, wird ein vorstehend beschriebenes Glassubstrat (insbesondere ein unbeschichtetes Brillenglas, ein mit einer Hartschicht und/oder einer üblichen Antireflexbeschichtung beschichtetes Brillenglas) verwendet, das aus den vorstehend erwähnten, für das erfindungsgemäße Brillenglas verwendbaren Materialien besteht. Der Abrollwinkel wird gemäß der vorliegenden Erfindung durch eine Meßmethode bestimmt, bei der ein beschichtetes Referenzglassubstrat ausgehend von einem Winkel von 0° (d.h. eine horizontale Ausrichtung des Referenzglassubstrats) schrittweise geneigt wird, bis ein auf das beschichtete Referenzglassubstrat aufgebrachter Flüssigkeitstropfen, beispielsweise Wasser oder Hexadecan, zu rollen beginnt. Diese Meßmethode zur Bestimmung des Abrollwinkels entspricht im wesentlichen der in EP 0 933 377 A2 auf Seite 13 unter [0123] beschriebenen Methode.

Ferner wird gemäß der vorliegenden Erfindung die Verwendung des vorstehend definierten Brillenglases beim Einschleifen und/oder Anstempeln von Brillengläsern bereitgestellt. Bei Verwendung des erfindungsgemäß beschichteten Brillenglases beim Einschleifen von Brillengläsern wurde festgestellt, daß sich eine Achsverdrehung sehr wirkungsvoll verhindern läßt. In diesem Zusammenhang war insbesondere überraschend, daß durch das erfindungsgemäß beschichtete Brillenglas trotz einer Oberflächenenergie von kleiner als 15 mJ/m² ein ausgezeichnetes Einschleif- und Anstempelverhalten erzielt werden kann. Nach Einschleifen des beschichteten Brillenglases läßt sich die transparente, ablösbare Schutzschicht (c) zusammen mit der gegebenenfalls vorgesehenen ablösbaren Schicht (b) aus einem anorganischen Material, beispielsweise durch händisches Abwischen mit einem Tuch, einfach wieder entfernen, wobei die sehr guten Brillenglaseigenschaften, wie Schichthaftung, Kratzfestigkeit und Klimabeständigkeit, und die sehr guten Eigenschaften des mit der permanenten Beschichtung (a) beschichteten Brillenglases, wie Hydrophobie, Oleophobie, Putzbarkeit und Glattheit, erhalten bleiben.

## Patentansprüche

1. Brillenglas, umfassend in der folgenden Reihenfolge (a) eine Beschichtung mit hydrophoben und oleophoben Eigenschaften, die (a1) ein Silan mit mindestens einer Fluor-enthaltenden Gruppe mit mehr als 20 Kohlenstoffatomen oder (a2) eine perfluorierte Kohlenwasserstoffverbindung umfaßt, gegebenenfalls (b) eine ablösbare Schicht aus einem anorganischen Material, und (c) eine darauf aufgebrachte transparente, ablösbare Schutzschicht, die ein Silan mit mindestens einer Fluor-enthaltenden Gruppe mit ≤ 20 Kohlenstoffatomen umfaßt, wobei das Brillenglas mit dem vorstehenden Schichtaufbau eine Oberflächenenergie von kleiner als 15 mJ/m² aufweist.

2. Brillenglas nach Anspruch 1, wobei die Beschichtung mit hydrophoben und oleophoben Eigenschaften aus (a1) einem Silan mit mindestens einer Fluor-enthaltenden Gruppe mit mehr als 20 Kohlenstoffatomen aufgebaut ist.

3. Brillenglas nach Anspruch 1 oder 2, wobei das Silan (a1) auf einem Silan mit mindestens einer hydrolysierbaren Gruppe oder Hydroxylgruppe basiert.

4. Brillenglas nach Anspruch 1, 2 oder 3, wobei das Silan (a1) eine oder mehrere polyfluorierte Gruppe(n) oder eine oder mehrere perfluorierte Gruppe(n) umfaßt.

5. Brillenglas nach einem der vorhergehenden Ansprüche, wobei das Silan (a1) eine oder mehrere polyfluorierte oder perfluorierte Alkylgruppe(n), eine oder mehrere polyfluorierte oder perfluorierte Alkenylgruppe(n) und/oder eine oder mehrere polyfluorierte oder perfluorierte Polyethereinheiten-enthaltende Gruppe(n) umfaßt.

6. Brillenglas nach Anspruch 1, wobei die perfluorierte Kohlenwasserstoffverbindung Polytetrafluorethylen ist.

7. Brillenglas nach einem der vorhergehenden Ansprüche, wobei das Silan in der Schutzschicht (c) eine oder mehrere teilweise fluorierte Fluoralkylgruppe(n) oder Fluoralkenylgruppe(n) umfaßt.

8. Verwendung des in einem der Ansprüche 1 bis 7 definierten Brillenglases beim Einschleifen und/oder Anstempeln von Brillengläsern.

## Claims

1. Spectacle lens comprising in the following sequence (a) a coating with hydrophobic and oleophobic properties, which (a1) comprises a silane with at least one fluorine-containing group with more than 20 carbon atoms or (a2) a perfluorinated hydrocarbon compound, if necessary (b) a removable layer of an inorganic material, and (c) a transparent removable protective layer applied thereto, which comprises a silane with at least one fluorine-containing group with ≤ 20 carbon atoms, wherein the spectacle lens with the above layer structure has a surface energy of less than 15 mJ/m².

2. Spectacle lens according to claim 1, wherein the coating with hydrophobic and oleophobic properties is configured from (a1) a silane with at least one fluorine-containing group with more than 20 carbon atoms.

3. Spectacle lens according to claim 1 or 2, wherein the silane (a1) is based on a silane with at least one hydrolysable group or hydroxyl group.

4. Spectacle lens according to claim 1, 2 or 3, wherein the silane (a1) comprises one or more polyfluorinated group(s) or one or more perfluorinated group(s).

5. Spectacle lens according to one of the preceding claims, wherein the silane (a1) comprises one or more polyfluorinated or perfluorinated alkyl group(s), one or more polyfluorinated or perfluorinated alkenyl group(s) and/or one or more polyfluorinated or perfluorinated group(s) containing polyether units.

6. Spectacle lens according to claim 1, wherein the perfluorinated hydrocarbon compound is polytetrafluoroethylene.

7. Spectacle lens according to one of the preceding claims, wherein the silane in the protective layer (c) comprises one or more partially fluorinated fluoroalkyl group(s) or fluoroalkenyl group(s).

8. Use of the spectacle lens defined in one of claims 1 to 7 in the grinding to size and/or stamping of spectacle lenses.

## Revendications

1. Verre de lunette, comprenant dans l'ordre, (a) un revêtement avec propriétés hydrophobes et oléophobes, qui comprend (a1) un silane avec au moins un groupe contenant du fluor, ayant plus de 20 atomes de carbone, ou (a2) un composé hydrocarbure perfluoré, le cas échéant (b) une couche détachable en un matériau inorganique, et (c) une couche protectrice détachable, transparente, appliquée sur ceux-ci, qui comprend un silane avec au moins un groupe contenant du fluor, ayant ≤ 20 atomes de carbone, où le verre de lunette avec la présente structure stratifiée, présente une énergie surfacique inférieure à 15 mJ/m².

2. Verre de lunette selon la revendication 1, où le revêtement avec propriétés hydrophobes et oléophobes, est élaboré à partir de (a1) un silane avec au moins un groupe contenant du fluor, ayant plus de 20 atomes de carbone.

3. Verre de lunette selon la revendication 1 ou 2, où le silane (a1) est à base d'un silane ayant au moins un groupe hydrolysable ou un groupe hydroxyle.

4. Verre de lunette selon la revendication 1, 2 ou 3, où le silane (a1) comprend un ou plusieurs groupes polyfluorés ou un ou plusieurs groupes perfluorés.

5. Verre de lunette selon l'une des revendications précédentes, où le silane (a1) comprend un ou plusieurs groupes alkyle polyfluorés ou perfluorés, un ou plusieurs groupes alcényle polyfluorés ou perfluorés, et/ou un ou plusieurs groupes contenant des unités polyéther, polyfluorés ou perfluorés.

6. Verre de lunette selon la revendication 1, où le composé hydrocarbure perfluoré est le polytétrafluoroéthylène.

7. Verre de lunette selon l'une des revendications précédentes, où le silane de la couche protectrice (c) comprend un ou plusieurs groupes fluoroalkyle ou fluoroalcényle partiellement fluorés.

8. Utilisation du verre de lunette défini dans l'une des revendications 1 à 7, pour la taille et/ou le poinçonnage de verres de lunette.
